# FASCICULE DE BREVET EUROPEEN

(11) **EP 1 412 288 B1**
(45) Date de publication et mention de la délivrance du brevet: **07.09.2005**
(21) Numéro de dépôt: 01270493.8
(22) Date de dépôt: 13.12.2001
(51) Int. Cl.: C01B 15/14

(54) **COMPOSE PEROXOSILICATE DESINFECTANT A EFFET ANTITARTRE PROCEDE DE PREPARATION ET SON UTILISATION**
DESINFIZIEREND WIRKENDE PEROXOSILICATVERBINDUNG MIT BELAGSVERHINDERNDER WIRKUNG, VERFAHREN ZUR HERSTELLUNG UND VERWENDUNG DAVON
DISINFECTING PEROXOSILICATED COMPOUND WITH SCALE PREVENTIVE EFFECT, PREPARATION METHOD AND USE THEREOF

(30) Priorité: 15.12.2000 FR 0016367
(43) Date de publication de la demande: 28.04.2004
(73) Titulaire: Institut Français du Pétrole, 92852 Rueil-Malmaison Cedex (FR); Eotec, 31660 Bessieres (FR)
(72) Inventeur: BOUKARI, Morou, F-31100 Toulouse (FR); AURIOL, Marc, F-31130 Flourens (FR); AURIOL, Sophie, F-31130 Flourens (FR)
(86) Numéro de dépôt international: PCT/FR2001/003974
(87) Numéro de publication internationale: WO 2002/048030

(56) Documents cités:
- EP-A- 0 831 056
- CH-A- 406 123
- DE-A- 19 714 440
- GB-A- 761 043
- PATENT ABSTRACTS OF JAPAN vol. 001, no. 059 (C-015), 8 juin 1977 (1977-06-08) & JP 52 019199 A (TOKUYAMA SODA CO LTD), 14 février 1977 (1977-02-14) cité dans la demande

## Description

L'invention concerne un procédé de traitement d'eau en vue d'assurer sa désinfection. Elle s'applique en particulier au traitement des eaux de piscines individuelles ou collectives, ou autres bassins, mais peut également trouver application pour traiter des eaux industrielles, des eaux potables chaudes ou froides ou des eaux usées urbaines. L'invention s'étend à un nouveau composé peroxosilicaté désinfectant à effet antitartre et anticorrosion pour la mise en oeuvre du procédé visé et son procédé de préparation.
Ce composé peroxosilicaté peut être aussi phosphaté.

L'arrière plan technologique est illustré par les brevets DE-A-19714440 et JP 52019199.

Le brevet EP 831 056 A décrit des composés de type Na₂SiO₃, nH₂O₂ ou de type PO₄³⁻, nH₂O₂ ; P₂O₇⁴⁻, nH₂O₂ ; P₃O₁₀⁵⁻ , nH₂O₂ ; PO₄H²⁻, nH₂O₂; PO₄H₂⁻, nH₂O₂.
Ces composés sont utilisés en tant qu'agents stérilisant des instruments médicaux.

Le brevet GB 761043 enseigne des composés de type métasilicate et peroxyde d'hydrogène Na₂SiO₃, nH₂O₂ en présence d'un catalyseur à base d'aluminium. Le gel obtenu est traité par un tensioactif, puis par un agent de séchage pour obtenir un gel solide. Ce produit est utilisé en tant que détachant de textiles.

Le brevet CH 406123 décrit aussi des composés de type métasilicate, nH₂O₂ en présence d'un accélérateur de formation du complexe obtenu, qui est un sel d'un métal des groupes 1 à 3.
Un tensioactif est ajouté au gel obtenu et un agent absorbant absorbe l'eau.
Les composés obtenus sont utilisés comme agent de blanchissage des fibres animales et végétales.

Les produits mentionnés dans ces brevets répondent au problème de l'instabilité des composés libérateur d'oxygène au stockage. Préparés en présence de métasilicates et donc en milieu basique, ces produits ne sont cependant pas stables dans l'eau (voir GB 761043 page 1 lignes 21-28). Leur pouvoir désinfectant est donc moindre et de plus courte durée et la décomposition du peroxyde d'hydrogène en milieu basique conduit à la libération d'espèces ioniques OH⁻ qui entraîne une élévation du pH dans l'eau.
D'autre part, le métasilicate est corrosif en milieu basique.

Il existe différents types de procédé de désinfection d'eaux en vue d'en éliminer les micro-organismes (bactéries, virus...); on qualifiera de « bactéricide » cet effet de destruction ou inactivation des micro-organismes. Toutefois, dans le cas d'un traitement d'eaux de piscine, il n'existe pas à l'heure actuelle un procédé de désinfection qui combine toutes les qualités souhaitables :
1) efficacité et rémanence de l'effet de désinfection garantissant une durée de cet effet sur de longues périodes (afin d'éviter l'obligation d'interventions humaines fréquentes),
2) non modification des caractéristiques physico-chimiques de l'eau (Ph, transparence, caractère inodore et non agressif vis-à-vis de l'homme,
3) absence de produits de décomposition (susceptibles de devenir nocifs en se concentrant ou de modifier la cinétique de l'effet bactéricide,
4) sécurité et facilité de mise en oeuvre, absence de risque pour l'environnement et caractère non corrosif vis-à-vis des installations (compatibilité avec les matériaux des tuyauteries, revêtements ...).
5) coût du traitement le plus faible possible

Le procédé de traitement d'eaux de piscine actuellement le plus répandu consiste à utiliser l'effet bactéricide très efficace du chlore en mélangeant à l'eau de la piscine un composé chloré, soit sous forme gazeuse (piscines collectives), soit sous forme liquide ou solide.

Outre les risques bien connus pour l'environnement, les défauts les plus graves des traitements au chlore résident :
- Pour le chlore gazeux ou liquide, dans les risques de mise en oeuvre, l'absence de rémanence, le caractère corrosif des eaux traitées (qui sont acidifiées dans le cas du chlore gazeux et alcalinisées dans le cas du chlore liquide).
- Pour le chlore solide, dans la rémanence relativement faible (exigeant des ajouts fréquents), l'apparition de produits de décomposition nocifs (ions, calcium en particulier), le caractère corrosif des eaux traitées (modification de pH) et, en cas d'excès, une modification des caractéristiques physico-chimiques de l'eau (agressive vis-à-vis des muqueuses, olfactive, et non neutre).

L'ensemble des défauts conduisent à une tendance à réduire ou à supprimer l'utilisation des composés chlorés dans le traitement des eaux de piscine.

Un autre procédé, essentiellement utilisé en piscines collectives ou pour traiter des eaux potables, consiste à utiliser de l'ozone gazeux. Ce procédé est satisfaisant en ce qui concerne les qualités (2), (3) et (4) évoquées précédemment; par contre il possède le très grave défaut de ne présenter aucune rémanence, de sorte qu'une pollution bactérienne en aval du traitement peut se développer rapidement ; ce procédé nécessite une continuité du traitement qui le limite à des installations professionnelles.

Un autre procédé de traitement consiste à utiliser du peroxyde d'hydrogène comme bactéricide ; toutefois le défaut grave du traitement au peroxyde d'hydrogène réside dans sa très faible rémanence (4 à 5 jours pour le traitement d'une piscine) et tous les procédés connus utilisant du peroxyde d'hydrogène comme bactéricide associent ce composé à d'autres composés (sel de biguanidine en particulier) pour augmenter sa rémanence et prévoient une concentration dans l'eau relativement élevée (100 ppm) pour obtenir une effet bactéricide satisfaisant ; cependant les produits actuellement associés au peroxyde d'hydrogène (sel de biguanidine) augmentent cette rémanence dans des proportions médiocres (10 à 20 jours selon la température) ; de plus ces produits associés conduisent à des défauts propres résidant dans l'apparition de produits organiques de décomposition (qui entraînent une consommation de peroxyde supplémentaire) et dans une incompatibilité totale vis-à-vis de tous les autres produits de traitement : ainsi pour initier un traitement peroxyde/biguanidine, il est nécessaire au préalable de vidanger entièrement et rincer soigneusement la piscine, préalablement traitée au chlore (cette vidange et ce rinçage coûtant de l'ordre d'une année de traitement). En outre, le couple peroxyde d'hydrogène/sel de biguanidine est onéreux et dépasse notablement le prix admissible et en particulier celui d'un traitement au chlore.

Il n'existe donc pas à l'heure actuelle un procédé de désinfection d'eau qui combine l'ensemble des qualités précitées :
1) efficacité et rémanence de l'effet bactéricide,
2) non modification des caractéristiques physico-chimiques de l'eau
3) absence de produits de décomposition
4) mise en oeuvre facile et sûre pour les utilisateurs, les matériels et l'environnement,
5) prix compatible avec le traitement d'eau de piscine.

Il convient de souligner que ce problème de désinfection des eaux de piscine se pose depuis de longues années et n'a pu être résolu de façon satisfaisante jusqu'à ce jour, malgré son importance économique (compte tenu du parc piscinier existant et de son développement prévisible). Actuellement, l'agent généralement utilisé est le chlore malgré les graves défauts précités et son image peu favorable pour le respect de l'environnement.

La présente invention se propose d'indiquer un nouveau procédé de désinfection d'eau qui combine les qualités précitées. Le procédé de l'invention est particulièrement adapté pour traiter des eaux de piscines, collectives ou individuelles, mais peut également être appliqué à tout autre traitement d'eau (eaux industrielles, eaux potables, eaux usées urbaines, bassins industriels...).

Un objet de l'invention est de fournir un procédé de traitement à base de composé libérateur d'oxygène actif jouant directement un rôle bactéricide, c'est à dire prévu à une concentration adaptée pour présenter une bonne efficacité bactéricide en fonction des conditions existantes (température, agitation, fréquentation de la piscine) bénéficiant d'une excellente rémanence (supérieure à 20 jours) et ne produisant aucun produit de décomposition.

Un autre objet est d'obtenir une sécurité et une facilité de mise en oeuvre et l'absence de caractère corrosif.

Un autre objet est d'indiquer un procédé ayant un prix de revient le plus bas possible, voire sensiblement inférieur au procédé utilisant le chlore (actuellement le moins cher).

Un autre objet est de fournir une composition désinfectante à effet bactéricide prolongé, contenant un composé peroxosilicaté, éventuellement phosphaté.

Un autre objet est de proposer une composition qui puisse s'appliquer à tous les types d'eau, sachant que les produits existant actuellement sur le marché ne peuvent avoir d'effet significatif et durable que lorsque l'eau à traiter présente une dureté inférieure à 15 degrés français (hydrotimétrie).

Un autre objet est de proposer une préparation de la composition objet de l'invention sous forme solide ou liquide, directement utilisable dans l'eau et en particulier dans une eau de piscine.

Plus précisément, l'invention concerne un composé peroxosilicaté désinfectant et à effet antitartre soluble au moins en partie dans l'eau, caractérisé en ce qu'il est obtenu au moins en partie par réaction d'au moins un métasilicate de métal alcalin ou alcalino-terreux, de préférence un métasilicate de sodium ou de potassium pentahydrate avec au moins un composé libérateur d'oxygène actif à pH sensiblement neutre.
Par pH sensiblement neutre, on entend une pH compris en général entre 6 et 8,0, avantageusement entre 6,5 et 7,5 et de préférence entre 6,8 et 7,4, obtenu habituellement par addition dans le milieu de préparation de sulfate acide de sodium, d'acide phosphorique ou de phosphate monosodique, de préférence de phosphate monosodique, ce qui contribue aussi à augmenter la vitesse de réaction conduisant au composé obtenu et à le rendre plus stable. Ce composé devient alors silicaté et phosphaté en présence de molécules contenant du phosphore.

On a remarqué que l'activité bactéricide du produit obtenu persistait plus longtemps, en raison d'un pourcentage d'oxygène actif plus élevé. Par ailleurs de manière surprenante, on a constaté un effet antitartre et un effet anticorrosif du produit obtenu.

Selon une caractéristique de l'invention, le composé libérateur d'oxygène actif peut être choisi dans le groupe formé par le péroxyde d'hydrogène (et ses solutions aqueuses), le monopersulfate de métal alcalin (sodium, potassium) ou alcalinoterreux, le monopersulfate acide de potassium, le peroxodisulfate de sodium, le peroxyde de sodium, le peroxyde de lithium, le peroxyde de barium, le peroxoborate de sodium et le peroxodisulfate de potassium et, de préférence ledit composé libérateur d'oxygène actif est du peroxyde d'hydrogène ou du monopersulfate de potassium.

Selon une autre caractéristique de l'invention, on a constaté que le composé libérateur d'oxygène actif peut être stabilisé et la fonction du produit final prolongée, en faisant réagir ce composé directement avec au moins un agent stabilisateur de ce composé, avant de le faire réagir avec du métasilicate alcalin ou alcalinoterreux. Le même effet peut être obtenu si on fait réagir le métasilicate avec cet agent stabilisateur puis si le produit obtenu est mis en contact avec le composé libérateur d'oxygène

L'agent stabilisateur du composé libérateur d'oxygène peut être, par exemple :
- l'hexamétaphosphate de sodium ou de potassium
- un sel d'ammonium polyquaternaire, en particulier le poly(hexaméthylammonium) chlorure, le poly [oxyethylène-(diméthylimino)éthylène-(diméthylimino)éthylène dichlorure], le dodecaméthylènediméthyliminochlorure, le 1,3-diazo-2,4-cyclopentadiène en mélange avec le 1-chloro-2,3-epoxypropane ; et
- un sel d'ammonium quaternaire monomère.

De préférence, on peut utiliser l'hexamétaphosphate de sodium ou de potassium qui contribue comme les autres molécules contenant du phosphore à apporter du phosphore au produit final de l'invention.

Le composé peroxosilicaté éventuellement phosphaté obtenu par réaction in situ, absorbé par un des constituants du mélange et/ou formé par une liaison physicochimique dans le mélange des constituants, présente un effet antitartre ainsi qu'un effet anticorrosif, qui peuvent être cinq fois plus élevés que ceux des produits de base. Ces peroxocomposés silicatés et phosphatés permettent non seulement d'éviter la corrosion des installations ou le dépôt de tartre dans ces installations, mais aussi permettent d'éliminer par simple circulation d'eau les dépots de rouille ou de tartre existant déjà dans les installations. Les constituants de base des réactions pris séparément ne permettent pas d'obtenir simultanément les effets cités ci-dessus.

La préparation du composé selon l'invention mettant en oeuvre les deux réactions précitées peut être catalysé par un sel d'aluminium, du sulfate d'aluminium par exemple, qui présente par ailleurs des propriétés de floculation de substances colloïdales ou en suspension dans l'eau que l'on peut ensuite éliminer par filtration.
On peut aussi rajouter un sel de cuivre, du sulfate de cuivre en tant qu'algicide dans la préparation.

Mais il est connu que par exemple parmi les composés libérateurs d'oxygène actif, le monopersulfate de potassium et le peroxyde d'hydrogène se décomposent rapidement dans l'eau en présence de cuivre ou d'aluminium. Cette décomposition a lieu même à l'état solide pour le monopersulfate de potassium et à l'état liquide concentré pour le peroxyde d'hydrogène.
Dans le cadre de l'invention, pour éviter la décomposition rapide du monopersulfate de potassium ou du peroxyde d'hydrogène par exemple, à l'état solide ou en solution , on peut encapsuler le cuivre et l'aluminium à l'état solide.
Selon une caractéristique de l'invention ou peut donc encapsuler le cuivre en faisant réagir le sel de cuivre, par exemple le sulfate de cuivre pentahydraté avec le métasilicate de sodium ou de potassium à l'état fondu. De la même manière, le sel d'aluminium, le sulfate d'aluminium par exemple peut être encapsulé par réaction avec le métasilicate à l'état fondu.

Selon une variante, le cuivre et l'aluminium, peuvent être complexés à l'état liquide, de préférence en milieu très concentré et même sursaturé en présence du métasilicate de sodium ou de potassium pentahydraté, éventuellement de l'hexamétaphosphate de sodium choisi par exemple comme agent stabilisateur et du phosphate monosodique. Sous ces deux formes (encapsulation ou complexation), le cuivre et l'aluminium n'ont pas d'effet décomposant des composés oxygénés. Dans l'eau, les composés encapsulés ou complexés vont libérer progressivement les métaux à la demande, le cuivre pour son effet algicide et l'aluminium pour ses effets catalytique et floculant.

Par ailleurs, la durée de vie du composé libérateur d'oxygène en particulier du monopersulfate ou du peroxyde d'hydrogène va être augmenté en raison de cette libération lente et progressive des métaux.

Les composés peroxosilicatés et phosphatés selon l'invention permettent de réaliser plusieurs fonctions, lorsque tous les ingrédients de la préparation ont interagi :
• désinfection par libération progressive de l'oxygène actif dans l'eau
• stabilisation longue durée permettant de libérer de l'oxygène actif pendant au moins 3 semaines.
• autorégulation du pH grâce à leur rôle tampon, ces produits étant efficaces dans une large gamme de pH (6 à 8,0).
• Antitartre. Ils permettent aussi l'abaissement de la dureté de l'eau en complexant le calcium ou en formant du tartre non adhérant qui peut être éliminé par simple filtration . Par exemple, sur des eaux traitées dont la dureté à l'origine était de 60 degrés français, on a obtenu au bout de 3 semaines l'abaissement de la dureté de l'eau d'environ 30%.
Les produits selon l'invention permettent donc de traiter des eaux très dures supérieures à 60 degrés français, ce qui n'est pas le cas des produits oxygénés existant actuellement sur le marché qui ne peuvent pas être mis en oeuvre efficacement au-delà de 15 degrés français de dureté de l'eau.
• Anticorrosion
Cet effet s'est avéré plus marqué que celui du métasilicate de sodium seul.
• Algicide
• Floculation des matières en suspension ou colloïdales et donc facilité à les éliminer par filtration dans le circuit d'eau.
La préparation du composé peroxosilicaté et phosphaté peut être mise oeuvre, selon les proportions pondérales suivantes :
• A l'état solide, par exemple .
On préconise alors avantageusement l'utilisation comme composé libérant de l'oxygène actif du monopersulfate de potassium.

| | |
|---|---|
| Monopersulfate de potassium | 1 à 80 % |
| Métasilicate de sodium pentahydraté | 1 à 40 % |
| Phosphate monosodique | 0,1 à 15 % |

On peut ajouter au moins un des constituants cités dans la description dans les proportions suivantes :

| | |
|---|---|
| Hexamétaphosphate de sodium | 0,1 à 15 % |
| Sulfate d'aluminium | 0,1 à 16 % |
| Sulfate de cuivre CuSO₄, 5H₂O | 0,2 à 10 % |

On opère de préférence selon les étapes suivantes :
a) On fait d'abord réagir le sulfate de cuivre pentahydraté et le phosphate monosodique (temps de réaction 15 minutes à 6 heures). On forme donc des complexes cuprophosphatés stables qui évitent la précipitation du cuivre sous forme métallique dans les réactions d'encapsulation.
b) On fait fondre par chauffage du métasilicate de sodium pentahydraté (température de chauffe 70°C à 100°C en général).
c) On mélange le métasilicate fondu avec le complexe cuprophosphaté de l'étape a) pour obtenir un produit encapsulé.
d) On fait ensuite réagir le produit encapsulé obtenu en c) avec un mélange contenant du monopersulfate de métal alcalin, par exemple de potassium, du sulfate d'aluminium, de l'agent stabilisateur choisi, par exemple de l'hexamétaphosphate de sodium pour obtenir un produit final sous forme solide, ayant les sept fonctions précitées. La réaction est très exothermique et dégage de la chaleur. La température monte à plus de 100°C avec dégagement de vapeur d'eau. Ce produit final est constitué de deux parties : Une partie active soluble et une partie neutre insoluble. Cette partie neutre insoluble est constituée d'une structure microporeuse qui peut assurer une fonction supplémentaire de filtration de microparticules contenues dans l'eau à traiter.

• A l'état liquide, par exemple
On utilise comme composé libérateur d'oxygène actif une solution aqueuse de peroxyde d'hydrogène et/ou du monopersulfate de potassium.
a) On mélange du peroxyde d'hydrogène et/ou du monopersulfate de potassium, du phosphate monosodique et éventuellement de l'eau dans les proportions pondérales suivantes :

| | |
|---|---|
| Monopersulfate de potassium | 1 à 20 % |
| Peroxyde d'hydrogène (35%) | 10 à 60 % |
| Phosphate monosodique | 0,1 à 15 % |
| Eau déminéralisée | 0 à 60 % |

et l'on obtient un ensemble A de produits
b) On fait réagir à l'état liquide les composants suivants dans les proportions pondérales suivantes :

| | |
|---|---|
| Métasilicate de sodium | 1 à 40 % |
| Sulfate de cuivre pentahydraté | 0,2 à 10 % |
| Sulfate d'aluminium | 0,1 à 16 % |
| Hexamétaphosphate de sodium | 0,1 à 15 % |
| Eau déminéralisée | 20 à 85 % |

On obtient un produit B de couleur violette après réaction de 10 minutes à 5 heures, aucun des composés de base n'ayant cette couleur.
c) On réalise au moment de l'utilisation la réaction de l'ensemble A de produits avec le produit B dans les proportions volumiques suivantes A :B de 1 : 1 à 20 :1.

L'invention concerne enfin l'utilisation du composé peroxosilicaté dans un procédé de traitement d'eau, de piscine par exemple pour son effet désinfectant, antitartre et anticorrosif en particulier. Selon le procédé d'utilisation, on peut mélanger dans l'eau en circuit fermé une quantité du composé peroxosilicaté comprise entre 5 et 100 g par mètre cube d'eau, on mesure régulièrement la concentration de composé libérateur d'oxygène (mesure de H₂O₂) et on ajoute du composé peroxosilicaté lorsque la concentration en composé libérateur d'oxygène s'abaisse au-dessous d'un certain seuil (1mg de H₂O₂ par litre d'eau, par exemple).

On a pu ainsi observer que l'on ne pouvait introduire des composés selon l'invention sous forme liquide de préférence, qu'une fois toutes les trois semaines pour constater la permanence des fonctions précitées.

Les exemples suivants illustrent l'invention.

### Exemple 1

Une piscine expérimentale est traitée en utilisant le composé peroxosilicaté et phosphaté sous forme liquide préparé selon les proportions pondérales suivantes :
- Produit A : on mélange le monopersulfate, le peroxyde d'hydrogène, le phosphate monosodique et l'eau déminéralisée dans des proportions pondérales suivantes :

| | |
|---|---|
| monopersulfate de potassium | 9 % |
| peroxyde d'hydrogène | 30 % |
| phosphate monosodique | 6 % |
| eau déminéralisée | 55 % |

- Produit B : on mélange le metasilicate pentahydraté, le sulfate de cuivre pentahydraté, l'hexamétaphosphate de sodium et l'eau déminéralisée dans les proportions suivantes :

| | |
|---|---|
| metasilicate de sodium pentahydraté : | 25 % |
| sulfate de cuivre pentahydraté : | 5,5 % |
| hexamétaphosphate de sodium : | 9,5 % |
| eau déminéralisée : | 54,5 % |
| sulfate d'aluminium | 5,5 % |

Le composé peroxosilicaté et phosphaté final est obtenu par réaction du produit A avec le produit B dans la proportion volumique de 5 : 1
Le pH de la réaction est de 6,7.

### - Caractéristiques de la piscine avant ajout du composé peroxosilicaté et phosphaté préparé selon l'invention :

- piscine équipée de deux skimmers avec deux paniers plastiques
- bonde de fond et grille d'aspiration en fonte présentant des traces rouille
- filtre à sable avec cuve en fer présentant de la rouille à l'intérieur
- dépôts de tartre sur les parois de la piscine, dans le sable et dans les skimmers
- pH de l'eau 7,6 (+/-0,1 unité pH)
- turbidité de l'au : 2,5 NTU
- dureté total TH° : 58,5 °F
- température de l'eau : 27°C
- caractéristiques microbiologiques de l'eau :
   - germes à 37°C/ml : 300
   - coliformes totaux 37°C/100ml : 100
   - coliformes thermotolérants 44°C/100ml : 154
   - staphylocoques totaux et microcoques/100ml : 208
   - staphylocoques pathogènes/100ml : 70

Cette piscine a été traitée avec le composé peroxosilicaté préparé selon l'invention à raison de 60g pour 1000 litres d'eau à traiter.

Pour vérifier l'activité anticorrosion du composé, un des paniers plastiques du skimmer a été remplacé par un panier en fer.

L'efficacité anticorrosion est evaluée par une observation visuelle de l'état du panier en fer, de la bonde de fond, de la grille d'aspiration en fonte et l'intérieur du filtre à sable.

### - Caractéristiques de la piscine après ajout du composé peroxosilicaté et phosphaté à raison de 60g pour 1000 litres d'eau à traiter :

La stabilisation longue durée de l'oxygène actif libéré est évaluée en mesurant la concentration en H₂O₂ de l'eau.
- Jour 1 (2h après ajout du composé)
   - pH : 7,6 (+/- 0,1 unité pH)
   - turbidité : 1,5 NTU
   - phosphates : 1 mg/l
   - Dureté : 58,5 ° F TH
   - Cu²⁺ : 0,15 mg/l
   - Température : 27°C
   - H₂O₂ mesuré : 25 mg/l
   - Trace de rouille qui existait sur la bonde fond, la grille et à l'intérieur du filtre à sable : présence
   - Pas de corrosion du panier en fer
   - Dépôt de tartre qui existait sur les parois de la piscine, dans les skimmers et dans le sable : présence
   - Caractéristiques microbiologiques :
      - germes à 37°C/ml : 30
      - coliformes totaux 37°C/100ml : 0
      - coliformes thermotolérants 44°C/100ml : 0
      - staphylocoques totaux et microcoques/100ml : 6
      - staphylocoques pathogènes /100 ml : 0
- Jour 21 (3 semaines après ajout du composé peroxosilicaté et phosphaté préparé selon l'invention)
   - pH : 7,65 (+/- 0, 1 unité pH)
   - turbidité de l'eau: < 1 NTU
   - dureté TH de l'eau : 35° F
   - température de l'eau : 27,5° C
   - H₂O₂ mesuré : 2 mg/l
   - Cu²+ : 0,08 mg/l
   - Phosphates : 0,3 mg/l
   - Absence d'algues
   - Disparition de rouille sur la bonde de fond, sur la grille d'aspiration et à l'intérieur du filtre à sable
   - Disparition des dépôts de tartre sur les parois de la piscine, dans les canalisations et dans le sable.
   - Pas de corrosion du panier en fer
   - Caractéristiques microbiologiques :
      - germes à 37°C/ml: 10
      - coliformes totaux : 0 à 37°C/100ml
      - coliformes thermotolérants : 0 à 44°C/100ml
      - staphylocoques et microcoques : 3 par 100ml
      - staphylocoques pathogènes : 0 par 100ml

Aucune variation de pH n'est observée et ce, sans ajout de correcteurs de pH. La turbidité de l'eau a diminué et est passée en dessous de 1, sans ajout de floculant.

La dureté de l'eau a diminué d'au moins 40 % avec disparition des dépôts de tartre sur les parois de la piscine, dans les skimmers, dans les canalisations et dans le sable.

Les traces de rouille ont totalement disparu de la bonde de fond, de la grille d'aspiration et à l'intérieur du filtre à sable, et il n'y a pas eu de corrosion du panier de skimmer en fer.

L'analyse bactériologique montre que l'eau est conforme aux normes officielles françaises des eaux de piscines.

### Exemple 2 (comparatif)

Le même essai a été réalisé sur une piscine témoin dans les mêmes conditions :
dans la piscine on a mélangé du monopersulfate de potassium et du peroxyde d'hydrogène (proportions pondérales respectives 9 et 30%). La concentration totale en H₂O₂ est de : 25 mg/l
- la rémanence de l'oxygène actif libéré est inférieure à sept jours
- pas de disparition des dépôts de tartre ni de rouille
- corrosion du panier en fer avec apparition de la rouille
- augmentation du pH à 7,9.

### Exemple 3

On fait réagir pendant vingt minutes les trois constituants ci-dessous dans les proportions pondérales suivantes :
- monopersulfate de sodium 55%
- métasilicate de sodium pentahydraté, fondu 6%
- phosphate monosodique 9%
- eau 30%
Le pH de la réaction est de 6,2.

On obtient un produit silicaté et phosphaté, solide que l'on introduit, au moyen de poches perméables à l'eau, à raison de 40g/m³ dans les skimmers de la piscine expérimentale de l'exemple 1 dont l'eau a une dureté de 58,5°F. Sensiblement les mêmes propriétés désinfectantes que celles décrites dans l'exemple 1 sont observées. Au bout de quinze jours, on constate une diminution de la dureté de l'eau de 30% et la disparition des dépôts de tartre et de rouille sur les parois de la piscine. Le pH de l'eau de piscine reste maintenu à 7,6.

Le traitement conforme à l'invention est donc efficace sur :
- le plan bactéricide avec une rémanence jusqu'à 3 semaines au moins
- le plan stabilisation de pH
- le plan floculation (amélioration turbidité de l'eau)
- le plan stabilisation longue durée de l'oxygène actif
- le plan algicide
- le plan antitartre et anticorrosion.

### Exemple 4 (comparatif)

Un essai a été réalisé sur la piscine témoin contenant la même eau de l'exemple 1:
On fait réagir dans les proportions pondérales suivantes :
- le monopersulfate de sodium 55%
- le métasilicate de sodium 6%
- eau 39%
Le pH de la réaction est de 9,5.

On met en oeuvre le produit obtenu dans les mêmes conditions de traitement que celles de l'exemple 3.
Ses caractéristiques de la piscine après ajout du produit sont :

| | | | | | | | |
|---|---|---|---|---|---|---|---|
| Temps (heure) | 1 | 2 | 4 | 6 | 8 | 12 | 24 |
| pH | 8,1 | 8,1 | 8,2 | 8,2 | 8,3 | 8,3 | 8,4 |
| H₂O₂ (mg/l) | 24 | 18 | 14 | 12 | 10 | 7,5 | 0,1 |
| germes 37°C/ml | 300 | 300 | 300 | 300 | 300 | 300 | 300 |
| coliformes totaux 37°C/100ml | 100 | 100 | 100 | 96 | 96 | 97 | 99 |
| coliformes thermotolérants 44°C/100ml | 154 | 151 | 154 | 143 | 143 | 147 | 147 |
| staphylocoques et microcoques/100ml | 208 | 208 | 208 | 207 | 207 | 207 | 207 |
| staphylocoques pathogènes/100ml | 70 | 70 | 70 | 70 | 70 | 70 | 70 |

Aucun effet bactéricide ne se manifeste lorsque le pH de la réaction est basique.

## Revendications

1. Composé peroxosilicaté désinfectant à effet antitartre et anticorrosif, soluble au moins en partie dans l'eau, **caractérisé en ce qu'**il est obtenu au moins en partie par réaction d'au moins un métasilicate de métal alcalin ou alcalinoterreux, de préférence un métasilicate de sodium ou de potassium pentahydrate avec au moins un composé libérateur d'oxygène actif, le pH de la réaction étant compris entre 6 et 8.

2. Composé selon la revendication 1, selon lequel la réaction en milieu sensiblement neutre est réalisée en présence d'acide phosphorique, de phosphate monosodique ou de sulfate acide de sodium.

3. Composé selon l'une des revendications 1 et 2 dans lequel le composé libérateur d'oxygène actif est choisi dans le groupe formé par le péroxyde d'hydrogène, le monopersulfate de sodium, le monopersulfate de potassium, le monopersulfate acide de sodium, le monopersulfate acide de potassium, le peroxodisulfate de sodium, le peroxyde de sodium, le peroxyde de lithium, le peroxyde de barium, le peroxoborate de sodium et le peroxodisulfate de potassium et de préférence le dit composé libérateur d'oxygène actif est du peroxyde d'hydrogène ou du monopersulfate de potassium.

4. Composé selon l'une des revendications 1 à 3, dans lequel le composé libérateur d'oxygène est stabilisé par réaction avec au moins un agent stabilisateur du composé libérateur d'oxygène actif et de préférence de l'hexamétaphosphate de sodium ou de potassium, avant de le faire réagir avec du métasilicate alcalin ou alcalino-terreux de façon à délivrer un composé peroxosilicaté éventuellement phosphaté sous forme solide.

5. Composé selon l'une des revendications 1 à 3, dans lequel on fait réagir le métasilicate de métal alcalin ou alcalino terreux avec au moins un agent stabilisateur du composé libérateur d'oxygène actif de façon à obtenir un produit de réaction que l'on met on contact avec le composé libérateur d'oxygène actif de façon à délivrer un composé peroxosilicaté éventuellement phosphaté sous forme liquide.

6. Composé selon l'une des revendications 1 à 5 dans lequel sa préparation est catalysée par un sel d'aluminium, de préférence du sulfate d'aluminium.

7. Composé selon l'une des revendications 1 à 4 dans lequel sa préparation comprend une étape de réaction du métasilicate à l'état fondu avec un sel soluble de cuivre, de préférence du sulfate de cuivre pentahydrate pour encapsuler le cuivre et éventuellement l'aluminium par la réaction du sel d'aluminium avec le métasilicate à l'état fondu.

8. Composé selon l'une des revendications 1 à 3 et 5, dans lequel sa préparation comprend une étape de réaction du métasilicate de sodium ou de potassium avec un sel soluble de cuivre, de préférence du sulfate de cuivre pentahydrate, à l'état liquide pour complexer le cuivre et éventuellement l'aluminium par la réaction du sel d'aluminium avec le dit métasilicate.

9. Procédé de préparation d'un composé peroxosilicaté, **caractérisé en ce que** l'on met en contact dans des conditions adéquates au moins un composé libérateur d'oxygène actif, de préférence du péroxyde d'oxygène ou du monopersulfate de potassium avec au moins un métasilicate de sodium ou de potassium, le pH de la réaction étant compris entre 6 et 8 et l'on récupère ledit composé.

10. Procédé selon la revendication 9 dans lequel on fait réagir au moins un agent stabilisateur du composé libérateur d'oxygène actif avec le composé libérateur d'oxygène avant de le faire réagir avec ledit métasilicate et on récupère un composé peroxosilicaté éventuellement phosphaté sous forme solide.

11. Procédé selon la revendication 9 dans lequel on fait réagir le métasilicate de métal alcalin ou alcalino terreux avec au moins un agent stabilisateur du composé libérateur d'oxygène actif de façon à obtenir un produit de réaction que l'on met en contact avec le composé libérateur d'oxygène actif de façon à délivrer un composé peroxosilicaté éventuellement phosphaté sous forme liquide.

12. Procédé selon l'une des revendications 9 à 11 dans lequel on introduit un sel d'aluminium comme catalyseur.

13. Procédé selon l'une des revendications 9 à 12 dans lequel on introduit un sel de cuivre sous forme encapsulée ou sous forme complexée par réaction avec le métasilicate de sodium ou de potassium.

14. Procédé selon l'une des revendications 9 à 13 dans lequel l'agent stabilisateur du composé libérateur d'oxygène actif est :
- l'hexamétaphosphate de sodium ou de potassium
- un sel d'ammonium polyquaternaire, en particulier le poly(hexaméthylammonium) chlorure, le poly [oxyethylène-(diméthylimino)éthylène-(diméthylimino)éthylène dichlorure], le dodecaméthylènediméthyliminochlorure, le 1,3-diazo-2,4-cyclopentadiène en mélange avec le 1-chloro-2,3-epoxypropane ; et
- un sel d'ammonium quaternaire monomère.

15. Procédé selon l'une des revendications 9 à 14, dans lequel les proportions pondérales des constituants sont les suivantes :
• composé libérateur d'oxygène , de préférence le monopersulfate de potassium et/ou le peroxyde d'hydrogène 1 à 80 %
• métasilicate de métal alcalin ou alcalino-terreux de préférence le métasilicate de sodium pentahydraté 1 à 40 %
• phosphate monosodique 0,1 à 15 %
• agent stabilisateur du composé libérateur d'oxygène,
de préférence l'héxamétaphosphate de sodium 0,1 à 15 %
• Sulfate d'aluminum 0,1 à 16 %
• Sulfate de cuivre pentahydraté 0,2 à 10 %
et éventuellement de l'eau

16. Utilisation d'un composé peroxosilicaté selon l'une des revendications 1 à 8 ou préparé selon l'une des revendications 9 à 15 dans un procédé de traitement d'eau en vue d'assurer la désinfection de l'eau et un effet antitartre et anticorrosif.

17. Utilisation selon la revendication 16 dans laquelle on mélange dans l'eau, en circuit fermé une quantité dudit composé comprise entre 5 et 100 g/m3 d'eau, on mesure régulièrement la concentration de composé libérateur d'oxygène (mesure du H₂O) et on ajoute du composé peroxosilicaté lorsque la concentration en composé libérateur d'oxygène s'abaisse au-dessous d'un certain seuil.

18. Utilisation selon l'une des revendications 16 et 17, en tant qu'agent floculant, algicide, stabilisateur longue durée de l'oxygène actif et stabilisateur du pH.

## Patentansprüche

1. Desinfizierende Peroxosilicatverbindung mit enthärtender und antikorrosiver Wirkung, die wenigstens teilweise in Wasser löslich ist, **dadurch gekennzeichnet, dass** sie wenigstens teilweise durch Reaktion wenigstens eines Metasilicats eines Alkalimetalls oder Erdalkalimetalls, vorzugsweise ein Natrium- oder Kaliummetasilicat-Pentahydrat mit wenigstens einer aktiven Sauerstoff freisetzenden Verbindung erhalten wird, wobei der pH der Reaktion zwischen 6 und 8 liegt.

2. Verbindung nach Anspruch 1, gemäß der die Reaktion im, im Wesentlichen im neutralen Medium in Gegenwart von Phosphorsäure, Mono-Natriumphosphat oder sauren Natriumsulfat durchgeführt wird.

3. Verbindung nach einem der Ansprüche 1 und 2, bei der die aktive Sauerstoff freisetzende Verbindung gewählt wird aus der Gruppe, die gebildet wird durch Wasserstoffperoxid, Natriummonopersulfat, Kaliummonopersulfat, saurem Natriummonopersulfat, saurem Kaliummonopersulfat, Natriumperoxodisulfat, Natriumperoxid, Lithiumperoxid, Bariumperoxid, Peroxoborat von Natrium und Kaliumperoxodisulfat und vorzugsweise ist die aktive Sauerstoff freisetzende Verbindung Wasserstoffperoxid oder Kaliummonopersulfat.

4. Verbindung nach einem der Ansprüche 1 bis 3, bei der die Sauerstoff freisetzende Verbindung durch Reaktion mit wenigstens einem Stabilisierungsreagens der aktiven Sauerstoff freisetzenden Verbindung stabilisiert wird und vorzugsweise Natrium- oder Kaliumhexametaphosphat, bevor man sie mit Alkali- oder Erdalkalimetallmetasilicat derart reagieren lässt, dass eine gegebenenfalls phosphatierte Peroxosilicatverbindung in fester Form abgegeben wird.

5. Verbindung nach einem der Ansprüche 1 bis 3, bei der man das Alkalimetall- oder Erdalkalimetallmetasilicat mit wenigstens einem Stabilisierungsreagens der aktiven Sauerstoff freisetzenden Verbindung derart reagieren lässt, dass ein Reaktionsprodukt erhalten wird, das man mit der aktiven Sauerstoff freisetzenden Verbindung derart kontaktiert, dass eine gegebenenfalls phosphatierte Peroxosilicatverbindung in Flüssigform abgegeben wird.

6. Verbindung nach einem der Ansprüche 1 bis 5, bei der ihre Herstellung durch ein Aluminiumsalz katalysiert wird, vorzugsweise Aluminiumsulfat.

7. Verbindung nach einem der Ansprüche 1 bis 4, bei der ihre Herstellung eine Reaktionsstufe des Metasilicats in geschmolzenen Zustand mit einem löslichen Kupfersalz, vorzugsweise Kupfersulfat-Pentahydrat umfasst, um das Kupfer und gegebenenfalls das Aluminium durch Reaktion des Aluminiumsalzes mit dem Metasilicat in geschmolzenem Zustand einzukapseln.

8. Verbindung nach einem der Ansprüche 1 bis 3 und 5, bei der ihre Herstellung eine Reaktionsstufe des Natrium- oder Kaliummetasilicats mit einem löslichen Kupfersalz, vorzugsweise Kupfersulfat-Pentahydrat in einem Flüssigzustand, umfasst, um das Kupfer und gegebenenfalls das Aluminium durch Reaktion des Aluminiumsalzes mit dem Metasilicat zu komplexieren.

9. Verfahren zur Herstellung einer Peroxosilicatverbindung, **dadurch gekennzeichnet, dass** man unter adäquaten Bedingungen wenigstens eine aktiven Sauerstoff freisetzende Verbindung, vorzugsweise Sauerstoffperoxid oder Kaliummonopersulfat, mit wenigstens einem Metasilicat von Natrium oder Kalium kontaktiert, wobei der pH der Reaktion zwischen 6 und 8 liegt und man die Verbindung gewinnt.

10. Verfahren nach Anspruch 9, bei dem man wenigstens ein Stabilisierungsmittel der aktiven Sauerstoff freisetzenden Verbindung mit der Sauerstoff freisetzenden Verbindung reagieren lässt, bevor man sie mit dem Metasilicat reagieren lässt und man eine gegebenenfalls phosphatierte Peroxosilicatverbindung in Feststoffform gewinnt.

11. Verfahren nach Anspruch 9, bei dem man das Metasilicat eines Alkali- oder Erdalkalimetalls mit wenigstens einem Stabilisierungsreagens der aktiven Sauerstoff freisetzenden Verbindung derart reagieren lässt, dass ein Reaktionsprodukt erhalten wird, das man mit der aktiven Sauerstoff freisetzenden Verbindung derart kontaktiert, dass eine gegebenenfalls phosphatierte Peroxosilicatverbindung in flüssiger Form abgegeben wird.

12. Verfahren nach einem der Ansprüche 9 bis 11, bei dem man ein Aluminiumsalz als Katalysator einführt.

13. Verfahren nach einem der Ansprüche 9 bis 12, bei dem man ein Kupfersalz in eingekapselter Form oder in komplexierter Form, durch Reaktion mit dem Metasilicat von Natrium oder Kalium, einführt.

14. Verfahren nach einem der Ansprüche 9 bis 13, bei dem das Stabilisierungsreagens der aktiven Sauerstoff freisetzenden Verbindung ist:
- Hexametaphosphat von Natrium oder Kalium
- ein polyquaternäres Ammoniumsalz, insbesondere Poly(Hexamethylammonium)Chlorid, Poly[Oxyethylen-(Dimethylimino)Ethylen-(Dimethylimino)Ethylendichlorid], Dodekanmethylendimethyliminochlorid, 1,3-Diazo-2,4-Cyclopentadien im Gemisch mit 1-Chlor-2,3-Epoxypropan; und
- ein monomeres quaternäres Ammoniumsalz.

15. Verfahren nach einem der Ansprüche 9 bis 14, bei dem die Gewichtsanteile der Bestandteile die folgenden sind:
• Sauerstoff freisetzende Verbindung, vorzugsweise das Monopersulfat von Kalium und/oder das Wasserstoffperoxid 1 bis 80%
• Alkali- oder Erdalkalimetallmetasilicat, vorzugsweise das pentahydrierte Natriummetasilicat 1 bis 40%
• Mononatriumphosphat 0,1 bis 15%
• Stabilisierungsreagens der Sauerstoff freisetzenden Verbindung, vorzugsweise Natriumhexametaphosphat 0,1 bis 15%
• Aluminiumsulfat 0,1 bis 16%
• pentahydriertes Kupfersulfat 0,2 bis 10%.
und gegebenenfalls Wasser

16. Verwendung einer Peroxosilicatverbindung nach einem der Ansprüche 1 bis 8 oder hergestellt nach einem der Ansprüche 9 bis 15 in einem Verfahren zur Behandlung von Wasser im Hinblick darauf, die Desinfizierung des Wassers und eine Enthärtungs- und Antikorrosivwirkung sicherzustellen.

17. Verwendung nach Anspruch 16, bei der man in Wasser im geschlossenen Kreislauf eine Menge der Verbindung, die zwischen 5 und 100 g/cm³ Wasser liegt, beimischt, man regelmäßig die Konzentration der Sauerstoff freisetzenden Verbindung misst (Messung von H₂O) und man Peroxosilicatverbindung zusetzt, wenn die Konzentration an Sauerstoff freisetzender Verbindung unterhalb einer bestimmten Schwelle absinkt.

18. Verwendung nach einem der Ansprüche 16 und 17 als Flockungsmittel, Algizid, Langzeitstabilisator des aktiven Sauerstoffs und pH-Stabilisator.

## Claims

1. A disinfecting peroxosilicate compound with an anti-limescale effect that is at least partially soluble in water, **characterized in that** it is obtained at least in part by reacting at least one alkali metal or alkaline-earth metal metasilicate, preferably a sodium or potassium metasilicate pentahydrate, with at least one compound that releases active oxygen, the pH of the reaction being in the range between 6 and 8.

2. A compound according to claim 1, in which the reaction in a substantially neutral medium is carried out in the presence of phosphoric acid, monosodium phosphate or acid sodium sulphate.

3. A compound according to claim 1 or claim 2, in which the active oxygen releasing compound is selected from the group formed by hydrogen peroxide, sodium monopersulphate, potassium monopersulphate, acid sodium monopersulphate, acid potassium monopersulphate, sodium peroxodisulphate, sodium peroxide, lithium peroxide, barium peroxide, sodium peroxoborate and potassium peroxodisulphate; preferably, said active oxygen releasing compound is hydrogen peroxide or potassium monopersulphate.

4. A compound according to one of claims 1 to 3, in which the oxygen releasing compound is stabilized by reaction with at least one agent for stabilizing the active oxygen releasing compound, preferably sodium or potassium hexametaphosphate, prior to reacting it with the alkali or alkaline-earth metasilicate in order to provide a peroxosilicate compound, optionally phosphated, in the solid form. -

5. A compound according to one of claims 1 to 3, in which the alkali or alkaline-earth metal metasilicate is reacted with at least one agent for stabilizing the active oxygen releasing compound to obtain a reaction product that is brought into contact with the active oxygen releasing compound in order to provide a peroxosilicate compound, optionally phosphated, in the liquid form.

6. A compound according to one of claims 1 to 5, in which its preparation is catalyzed by an aluminium salt, preferably aluminium sulphate.

7. A compound according to one of claims 1 to 4, in which its preparation comprises a step for reacting the metasilicate in the molten state with a soluble copper salt, preferably copper sulphate pentahydrate, to encapsulate the copper, and possibly to encapsulate aluminium by reacting an aluminium salt with the metasilicate in the molten state.

8. A compound according to one of claims 1 to 3 and 5, in which its preparation comprises a step for reacting the sodium or potassium metasilicate with a soluble copper salt, preferably copper sulphate pentahydrate, in the liquid state to complex the copper, and possibly to encapsulate aluminium by reacting an aluminium salt with said metasilicate.

9. A method for preparing a peroxosilicate compound, **characterized in that** at least one active oxygen releasing compound, preferably hydrogen peroxide or potassium monopersulphate, is brought into contact under suitable conditions with at least one sodium or potassium metasilicate, the pH of the reaction being in the range between 6 and 8, and said compound is recovered.

10. A method according to claim 9, in which at least one agent for stabilizing the active oxygen releasing compound is reacted with the oxygen releasing compound prior to reacting it with said metasilicate and a peroxosilicate compound, optionally phosphated, is recovered in the solid form.

11. A method according to claim 9, in which the alkali metal or alkaline-earth metal metasilicate is reacted with at least one agent for stabilizing the active oxygen releasing compound to obtain a reaction product that is brought into contact with the active oxygen releasing compound in order to provide a peroxosilicate compound, optionally phosphated, in the liquid form.

12. A method according to one of claims 9 to 11, in which an aluminium salt is introduced as a catalyst.

13. A method according to one of claims 9 to 12, in which a copper salt in an encapsulated or complexed form is introduced by reaction with the sodium or potassium metasilicate.

14. A method according to one of claims 9 to 13, in which the agent for stabilizing the active oxygen releasing compound is:
- sodium or potassium hexametaphosphate;
- a polyquaternary ammonium salt, in particular poly(hexamethylammonium) chloride, poly[oxyethylene-(dimethylimino)ethylene-(dimethylimino) ethylene dichloride], dodecamethylenedimethyliminochloride, 1,3-diazo-2,4-cyclopentadiene mixed with 1-chloro-2,3-epoxypropane; or
- a monomeric quaternary ammonium salt.

15. A method according to one of claims 9 to 14, in which the proportions by weight of the constituents are as follows:
• oxygen releasing compound, preferably potassium monopersulphate and/or hydrogen peroxide 1% to 80%
• alkali metal or alkaline-earth metal metasilicate, preferably sodium metasilicate pentahydrate 1% to 40%
• monosodium phosphate 0.1% to 15%
• oxygen releasing compound stabilizing agent, preferably sodium hexametaphosphate 0.1% to 15%
• aluminium sulphate 0.1% to 16%
• copper sulphate pentahydrate 0.2% to 10%
• and optionally, water.

16. Use of a peroxosilicate compound according to one of claims 1 to 8 or prepared according to one of claims 9 to 15 in a method for treating water to disinfect the water and provide an anti-limescale and anticorrosive effect.

17. Use according to claim 16 in which a quantity of said compound in the range 5 to 100 g per cubic metre of water is mixed with the water, in a closed circuit, the concentration of the oxygen releasing compound (H₂O₂ measurement) is measured regularly, and the peroxosilicate compound is added when the concentration of oxygen releasing compound drops below a certain threshold.

18. Use according to one of claims 16 and 17, as flocculating agent, algicide, long-term stabilizer of active oxygen and pH stabilizer.
